(19) Europäisches Patentamt
European Patent Office
Office européen des brevets

(11) EP 0 894 114 B1

(12) **EUROPÄISCHE PATENTSCHRIFT**

(45) Veröffentlichungstag und Bekanntmachung des Hinweises auf die Patenterteilung:
**18.07.2001 Patentblatt 2001/29**

(21) Anmeldenummer: **97920704.0**

(22) Anmeldetag: **17.04.1997**

(51) Int Cl.7: **C08K 3/32**, C08L 67/02, C08L 69/00

(86) Internationale Anmeldenummer:
**PCT/EP97/01912**

(87) Internationale Veröffentlichungsnummer:
**WO 97/40092 (30.10.1997 Gazette 1997/46)**

(54) **FLAMMGESCHÜTZTE THERMOPLASTISCHE FORMMASSEN**

FIREPROOFED THERMOPLASTIC MOULDING MASSES

MATIERES DE MOULAGE THERMOPLASTIQUES IGNIFUGEES

(84) Benannte Vertragsstaaten:
**AT BE CH DE DK ES FR GB IT LI NL**

(30) Priorität: **18.04.1996 DE 19615230**

(43) Veröffentlichungstag der Anmeldung:
**03.02.1999 Patentblatt 1999/05**

(73) Patentinhaber: **BASF AKTIENGESELLSCHAFT**
**67056 Ludwigshafen (DE)**

(72) Erfinder:
- **GAREISS, Brigitte**
  **D-67271 Obersülzen (DE)**
- **SCHNEIDER, Hans-Michael**
  **D-67549 Worms (DE)**
- **WEBER, Martin**
  **D-67487 Maikammer (DE)**

(56) Entgegenhaltungen:
**EP-A- 0 417 839** **US-A- 3 332 905**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 894 114 B1

## Beschreibung

Die Erfindung betrifft flammgeschützte thermoplastische Formmassen, enthaltend

A) 5 bis 99 Gew.-% eines thermoplastischen Polymeren
B) 0,1 bis 50 Gew.-% eines Phosphazens der allgemeinen Formel I

$$(PN_{2-x}H_{1-y})_z \qquad I$$

worin x, y und z unabhängig voneinander folgende Zahlenwerte bedeuten:
$1 > x > 0,05$
$1 > y > 0,05$
$z > 1$
C) 0 bis 70 Gew.-% weiterer Zusatzstoffe und Verarbeitungshilfsmittel,

wobei die Summe der Gewichtsprozente der Komponenten A) bis C) 100 % ergibt.
Weiterhin betrifft die Erfindung die Verwendung der erfindungsgemäßen Formmassen zur Herstellung von Fasern, Folien und Formkörpern sowie die hierbei erhältlichen Formkörper.
Halogenhaltige flammgeschützte Thermoplaste sind neben anderen Nachteilen toxikologisch bedenklich und werden in zunehmendem Maße durch halogenfreie flammgeschützte Thermoplaste ersetzt.
Wesentliche Anforderungen für derartige Flammschutzmittelsysteme sind insbesondere eine helle Eigenfarbe, ausreichende Temperaturstabilität bei der Einarbeitung in den Thermoplasten sowie der Erhalt der Wirksamkeit bei Zusatz von faserförmigen Füllstoffen (sog. Dochteffekt bei Glasfasern, welcher die Flammschutzwirkung negativ beeinflußt).
Neben rotem Phosphor enthaltenden Thermoplasten kommen vier weitere halogenfreie Flammschutzmittel in Betracht.

1) Anorganische Flammschutzmittel auf Basis von Hydroxiden oder Carbonaten, insbesondere des Magnesiums, welche in hohen Mengen eingesetzt werden müssen, um ausreichend wirksam zu sein,

2) Stickstoffhaltige Flammschutzmittel wie Melamincyanurat, welches meist nur in unverstärkten Thermoplasten ausreichenden Flammschutz zeigen,

3) Phosphorverbindungen, wie Triphenylphospinoxid als Flammschutzmittel, die in vielen Thermoplasten den unerwünschten Nebeneffekt eines Weichmachers zeigen,

4) Ammoniumpolyphosphate oder Melaminphosphat, welche bei Temperaturen oberhalb von 200°C keine ausreichende Thermostabilität besitzen.

Phosphazene und ihre Wirkung als Flammschutzmittel in Thermoplasten sind aus der US 3,332,905 und aus C. W. Allen, Journal of Fire Sciences 11, 1993, S. 320 bis 328 bekannt.
Aus der EP-A 417 839 ist der Zusatz eines Phosphams der Formel $(PN_2H)_x$ als Flammschutzmittel für Thermoplaste bekannt. Wie thermogravimetrische Untersuchungen in der EP-A 417 839 zeigen, ist $(PN_2H)_x$ bis 390°C thermostabil, weist jedoch Nachteile in anderen Flammschutzeigenschaften aus, da keine Krustenbildung bei Entzünden erfolgt und somit der Zusatz eines Antitropfmittels gegen brennendes Abtropfen sowie eines die Verkohlung verstärkenden Additivs notwendig macht.
Der vorliegenden Erfindung lag daher die Aufgabe zugrunde, ein Flammschutzmittel für Thermoplaste zur Verfügung zu stellen, welches eine ausreichende Krustenbildung und Verkohlen beim Entzünden zeigt und nicht brennend abtropft.
Demgemäß wurden die eingangs definierten Formmassen gefunden. Bevorzugte Ausführungsformen sind den Unteransprüchen zu entnehmen.
Überraschenderweise führt die Zugabe eines hochvernetzten Phosphazens zu flammgeschützten Formmassen, welche nicht brennend abtropfen und eine ausreichende Krustenbildung und Verkohlung zeigen. Dies ist insofern überraschend, da hochvernetzte Phosphazene thermisch sehr stabil sind, d.h. chemisch inert sind und somit eine schlechtere Wirksamkeit zeigen sollten.
Als Komponente A) enthalten die erfindungsgemäßen Formmassen 5 bis 99, vorzugsweise 10 bis 80 und

insbesondere 30 bis 80 Gew.-% eines thermoplastischen Polymeren.

Grundsätzlich zeigt sich der vorteilhafte Effekt bei den erfindungsgemäßen Formmassen bei Thermoplasten jeglicher Art. Eine Aufzählung geeigneter Thermoplaste findet sich beispielsweise im Kunststoff-Taschenbuch (Hrsg. Saechtling), Auflage 1989, wo auch Bezugsquellen genannt sind. Verfahren zur Herstellung solcher thermoplastischer oder duroplastischer Kunststoffe sind dem Fachmann an sich bekannt. Nachstehend seien einige bevorzugte Kunststoffarten etwas näher erläutert.

1. Polyoxymethylenhomo- oder -copolymerisate

Derartige Polymerisate sind dem Fachmann an sich bekannt und in der Literatur beschrieben.

Ganz allgemein weisen diese Polymere mindestens 50 mol-% an wiederkehrenden Einheiten $-CH_2O-$ in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere bevorzugt, insbesondere solche, die neben den wiederkehrenden Einheiten $-CH_2O-$ noch bis zu 50, vorzugsweise 0,1 bis 20 und insbesondere 0,3 bis 10 mol-% an wiederkehrenden Einheiten

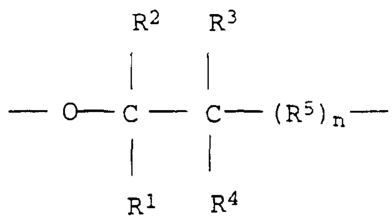

enthalten, wobei $R^1$ bis $R^4$ unabhängig voneinander ein Wasserstoffatom, eine C1- bis $C_4$-Alkylgruppe oder eine halogensubstituierte Alkylgruppe mit 1 bis 4 C-Atomen und $R^5$ eine $-CH_2-$, $-CH_2O-$, eine $C_1$- bis $C_4$-Alkyl- oder $C_1$- bis $C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

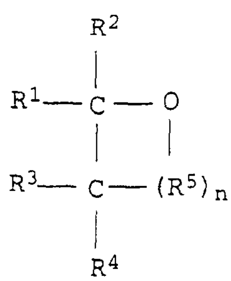

wobei $R^1$ bis $R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel

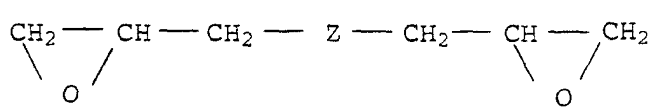

wobei Z eine chemische Bindung, -O-, -ORO- (R= $C_1$- bis $C_8$-Alkylen oder $C_2$- bis $C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol,Cyclobutan-1,3-diol, 1,2-Propandiol und Cyclohexan-1,4-diol, um nur einige Beispiele zu nennen.
Verfahren zur Herstellung der vorstehend beschriebenen Homo- und Copolymerisate sind dem Fachmann bekannt und in der Literatur beschrieben, so daß sich hier nähere Angaben erübrigen.
Die bevorzugten Polyoxymethylencopolymere haben Schmelzpunkte von mindestens 150°C und Molekulargewichte (Gewichtsmittelwert) Mw im Bereich von 5000 bis 200000, vorzugsweise von 7000 bis 150000.
Endgruppenstabilisierte Polyoxymethylenpolymerisate, die an den Kettenenden C-C-Bindungen aufweisen, werden besonders bevorzugt.

2. Polycarbonate und Polyester

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.
Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.
Besonders bevorzugte Polycarbonate sind solche auf der Basis von Bisphenol A oder Bisphenol A zusammen mit bis zu 30 mol.-% der vorstehend genannten aromatischen Dihydroxyverbindungen.
Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan).
Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. tert.-Butylgruppen.
Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.
Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.
Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.
Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.
Die Viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verh. 1:1 bei 25°C)).

3. Polyolefine

Hier sind ganz allgemein Polyethylen und Polypropylen sowie Copolymerisate auf der Basis von Ethylen oder Propylen, ggf. auch mit höheren $\alpha$-Olefinen zu nennen. Entsprechende Produkte sind unter den Handelsnamen Lupolen® bzw. Novolen® von der BASF Aktiengesellschaft erhältlich.

4. Poly(meth)acrylate

Hierunter sind insbesondere Polymethylmethacrylat (PMMA) sowie Copolymere auf der Basis von Methylmethacrylat mit bis zu 40 Gew.-% weiterer copolymerisierbarer Monomerer genannt, wie sie beispielsweise unter den Bezeichnungen Lucryl® von der BASF Aktiengesellschaft oder Plexiglas® von Röhm GmbH erhältlich sind.

5. Polyamide

Bevorzugt sind ganz allgemein Polyamide mit aliphatischem teilkristallinen oder teilaromatischem sowie amorphem Aufbau jeglicher Art und deren Blends. Entsprechende Produkte sind unter dem Handelsnamen Ultramid® von der BASF AG erhältlich.

6. Vinylaromatische Polymere

Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000.

Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Bevorzugte ASA-Polymerisate sind aufgebaut aus einer Weich- oder Kautschukphase aus einem Pfropfpolymerisat aus:

$A_1$ 50 bis 90 Gew.-% einer Pfropfgrundlage auf Basis von

$A_{11}$ 95 bis 99,9 Gew.-% eines $C_2$-$C_{10}$-Alkylacrylats und

$A_{12}$ 0,1 bis 5 Gew.-% eines difunktionellen Monomeren mit zwei olefinischen, nicht konjugierten Doppelbindungen, und

$A_2$ 10 bis 50 Gew.-% einer Pfropfauflage aus

$A_{21}$ 20 bis 50 Gew.-% Styrol oder substituierten Styrolen der allgemeinen Formel I oder deren Mischungen, und

$A_{22}$ 10 bis 80 Gew.-% Acrylnitril, Methacrylnitril, Acrylsäureestern oder Methacrylsäureestern oder deren Mischungen,

in Mischung mit einer Hartmatrix auf Basis eines SAN-Copolymeren $A_3$) aus:

$A_{31}$ 50 bis 90, vorzugsweise 55 bis 90 und insbesondere 65 bis 85 Gew.-% Styrol und/oder substituierten Styrolen der allgemeinen Formel I und

$A_{32}$ 10 bis 50, vorzugsweise 10 bis 45 und insbesondere 15 bis 35 Gew.-% Acrylnitril und/oder Methacrylnitril.

Bei der Komponente $A_1$) handelt es sich um ein Elastomeres, welches eine Glasübergangstemperatur von unter -20, insbesondere unter -30°C aufweist.

Für die Herstellung des Elastomeren werden als Hauptmonomere $A_{11}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht $A_{11}$ + $A_{12}$ eines polyfunktionellen Monomeren mit mindestens zwei olefinischen, nicht korjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $A_1$ sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $A_1$ am Pfropfpolymerisat $A_1$+$A_2$ beträgt 50 bis 90, vorzugsweise 55 bis 85 und insbesondere 60 bis 80 Gew.-%, bezogen auf das Gesamtgewicht von $A_1$+$A_2$.

Auf die Pfropfgrundlage $A_1$ ist eine Pfropfhülle $A_2$ aufgepfropft, die durch Copolymerisation von

$A_{21}$ 20 bis 90, vorzugsweise 30 bis 90 und insbesondere 30 bis 80 Gew.-% Styrol oder substituierten Styrolen der allgemeinen Formel I

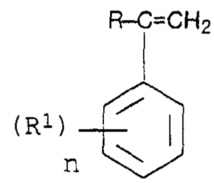

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$A_{22}$ 10 bis 80, vorzugsweise 10 bis 70 und insbesondere 20 bis 70 Gew.-% Acrylnitril, Methacrylnitril, Acrylsäureestern oder Methacrylsäureestern oder deren Mischungen erhältlich ist.

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Bevorzugte Acryl- bzw. Methacrylsäureester sind solche, deren Homopolymere bzw. Copolymerisate mit den anderen Monomeren der Komponente $A_{22}$) Glasübergangstemperaturen von mehr als 20°C aufweisen; prinzipiell können jedoch auch andere Acrylsäureester eingesetzt werden, vorzugsweise in solchen Mengen, so daß sich insgesamt für die Komponente $A_2$ eine Glasübergangstemperatur $T_g$ oberhalb 20°C ergibt.

Besonders bevorzugt werden Ester der Acryl- oder Methacrylsäure mit $C_1$-$C_8$-Alkoholen und Epoxygruppen enthaltende Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger $T_g$ zu bilden, vorzugsweise in nicht zu hohem Anteil eingesetzt wird.

Die Pfropfhülle $A_2$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestern.

Das Pfropfmischpolymerisat $A_1$ + $A_2$ weist im allgemeinen eine mittlere Teilchengröße von 100 bis 1.000 nm, im besonderen von 200 bis 700 nm, ($d_{50}$-Gewichtsmittelwert) auf. Die Bedingungen bei der Herstellung des Elastomeren $D_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat ($A_1$+$A_2$) zählen im Rahmen dieser Erfindung auch die bei der Pfropfmischpolymerisation zur Herstellung der Komponente $A_2$) entstehenden freien, nicht gepfropften Homo- und Copolymerisate.

Nachstehend seien einige bevorzugte Pfropfpolymerisate angeführt:

1: 60 Gew.-% Pfropfgrundlage $A_1$ aus

$A_{11}$ 98 Gew.-% n-Butylacrylat und
$A_{12}$ 2 Gew.-% Dihydrodicyclopentadienylacrylat und 40 Gew.-% Pfropfhülle $A_2$ aus

$A_{21}$ 75 Gew.-% Styrol und
$A_{22}$ 25 Gew.-% Acrylnitril

2: Pfropfgrundlage wie bei 1 mit 5 Gew.-% einer ersten Pfropfhülle aus Styrol und 35 Gew.-% einer zweiten Pfropfstufe aus

$A_{21}$ 75 Gew.-% Styrol und
$A_{22}$ 25 Gew.-% Acrylnitril

3: Pfropfgrundlage wie bei 1 mit 13 Gew.-% einer ersten Pfropfstufe aus Styrol und 27 Gew.-% einer zweiten Pfropfstufe aus Styrol und Acrylnitril im Gewichtsverhältnis 3:1

Die als Komponente $A_3$) enthaltenen Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von ($A_1$ + $A_2$):$A_3$ liegt im Bereich von 1:2,5 bis 2,5:1, vorzugsweise von 1:2 bis 2:1 und insbesondere von 1:1,5 bis 1,5:1.

Geeignete SAN-Polymere als Komponente A) sind vorstehend (siehe $A_{31}$ und $A_{32}$) beschrieben.

Die Viskositätszahl der SAN-Polymerisate, gemessen gemäß DIN 53 727 als 0,5 gew.-%ige Lösung in Dimethylformamid bei 23°C liegt im allgemeinen im Bereich von 40 bis 100, vorzugsweise 50 bis 80 ml/g.

ABS-Polymere als Polymer (A) in den erfindungsgemäßen mehrphasigen Polymermischungen weisen den gleichen Aufbau wie vorstehend für ASA-Polymere beschrieben auf. Anstelle des Acrylatkautschukes $A_1$) der Pfropfgrundlage beim ASA-Polymer werden üblicherweise konjugierte Diene, eingesetzt, so daß sich für die Pfropfgrundlage $A_4$ vorzugsweise folgende Zusammensetzung ergibt:

$A_{41}$ 70 bis 100 Gew.-% eines konjugierten Diens und
$A_{42}$ 0 bis 30 Gew.-% eines difunktionellen Monomeren mit zwei olefinischen nicht-konjugierten Doppelbindungen

Pfropfauflage $A_2$ und die Hartmatrix des SAN-Copolymeren $A_3$) bleiben in der Zusammensetzung unverändert. Derartige Produkte sind im Handel erhältlich. Die Herstellverfahren sind dem Fachmann bekannt, so daß sich weitere Angaben hierzu erübrigen.

Das Gewichtsverhältnis von ($A_4$ + $A_2$):$A_3$ liegt im Bereich von 3:1 bis 1:3, vorzugsweise von 2:1 bis 1:2.

Besonders bevorzugte Zusammensetzungen der erfindungsgemäßen Formmassen enthalten:

$A_1$) 10 bis 80 Gew.-% eines Polybutylenterephthalates
$A_2$) 0 bis 40 Gew.-% eines Polyethylenterephthalates
$A_3$) 1 bis 40 Gew.-% eines ASA- oder ABS-Polymeren oder deren Mischungen
B) 1 bis 35 Gew.-% eines Phosphazens gemäß Anspruch 1
C) 0 bis 40 Gew.-% eines faser- oder teilchenförmigen Füllstoffes oder deren Mischungen

Derartige Produkte sind unter dem Warenzeichen Ultradur® S (ehemals Ultrablend® S) von der BASF Aktiengesellschaft erhältlich.

Weitere bevorzugte Zusammensetzungen enthalten

$A_1$) 10 bis 80 Gew.-% eines Polycarbonates
$A_2$) 0 bis 40 Gew.-% eines Polyesters, vorzugsweise Polybutylenterephthalat,
$A_3$) 1 bis 40 Gew. -% eines ASA- oder ABS-Polymeren oder deren Mischungen
B) 1 bis 35 Gew.-% eines Phosphazens gemäß Anspruch 1
C) 0 bis 40 Gew.-% eines faser- oder teilchenförmigen Füllstoffes oder deren Mischungen.

Derartige Produkte sind unter dem Warenzeichen Terblend® der BASF AG erhältlich.

7. Polyarylenether

Unter Polyarylenethern sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste

sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, $C_1$- bis $C_{10}$-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor. Diese können neben -O-, z.B. über -S-, -SO-, $-SO_2-$, -CO-, -N=N-, -COO-, einen Alkylenrest oder eine chemische Bindung miteinander verknüpft sein. In den Polyarylenethern (B) können die Arylengruppen auch über unterschiedliche Gruppen miteinander verknüpft sein.

Zu den bevorzugten Polyarylenethern zählen solche mit wiederkehrenden Einheiten der allgemeinen Formel I

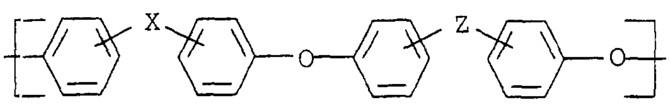

(I)

Ebenso können deren kernsubstituierten Derivate verwendet werden. Als Substituenten kommen vorzugsweise $C_1$-$C_6$-Alkyl, wie Methyl, Ethyl oder t-Butyl, $C_1$-$C_6$-Alkoxy, wie Methoxy oder Ethoxy, Aryl, insbesondere Phenyl, Chlor oder Fluor in Betracht. Die Variable X kann $-SO_2-$, -SO-, -S-, -O-, CO, -N=N-, $-RC=CR^a-$, $-CR^bR^c-$ oder eine chemische Bindung sein. Die Variable Z kann für $-SO_2-$, -SO-, -CO-, -O-, -N=N- oder $-RC=CR^a$ stehen. Hierbei stellen R und $R^a$ jeweils Wasserstoff, $C_1$-$C_6$-Alkyl, z.B. Methyl, n-Propyl oder n-Hexyl, $C_1$-$C_6$-Alkoxy, darunter Methoxy, Ethoxy oder Butoxy oder Aryl, insbesondere Phenyl dar. Die Reste $R^b$ und $R^c$ können jeweils Wasserstoff oder eine $C_1$- bis $C_6$-Alkylgruppe, insbesondere Methyl, darstellen. Sie können aber auch zu einem $C_4$- bis $C_{10}$-Cycloalkylring, bevorzugt Cyclopentyl- oder Cyclohexylring, miteinander verknüpft sein, der seinerseits mit einer oder mehreren Alkylgruppen, vorzugsweise Methyl substituiert sein kann. Daneben können $R^b$ und $R^c$ auch eine $C_1$- bis $C_6$-Alkoxygruppe, z.B. Methoxy oder Ethoxy oder eine Arylgruppe, besonders Phenyl, darstellen. Die vorgenannten Gruppen können ihrerseits jeweils mit Chlor oder Fluor substituiert sein.

Die Polyarylenether können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Die Molekulargewichte der Blöcke- bzw. der Pfropfarme in den Copolymeren liegt in der Regel im Bereich von 1 000 bis 30 000 g/mol. Die Blöcke unterschiedlicher Struktur können alternierend oder statistisch angeordnet sein. Der Gewichtsanteil der Polyarylenethersegmente in den Co-oder Blockcopolymeren beträgt im allgemeinen mindestens 3, vorzugsweise mindestens 10 Gew.-%. Der Gewichtsanteil der Polyarylenethersulfone oder -ketone kann bis zu 97 Gew.-% betragen. Bevorzugt werden Co- oder Blockcopolymere mit einem Gewichtsanteil an Polyarylenethersegmenten mit bis zu 90 Gew.-%. Besonders bevorzugt werden Co- oder Blockcopolymere mit 20 bis 80 Gew.-% Polyarylenethersegmenten.

Im allgemeinen weisen die Polyarylenether mittlere Molekulargewichte $\overline{M}_n$ (Zahlenmittel) im Bereich von 10 000 bis 60 000 g/mol und Viskositätszahlen von 30 bis 150 ml/g auf. Die Viskositätszahlen werden je nach Löslichkeit der Polyarylenether entweder in 1 gew.-%iger N-Methylpyrrolidon-Lösung, in Mischungen aus Phenol und o-Dichlorbenzol oder in 96 %iger Schwefelsäure bei jeweils 20°C bzw. 25°C gemessen.

Die Polarylenether (A) sind an sich bekannt oder können nach an sich bekannten Methoden hergestellt werden.

So lassen sich beispielsweise Polyphenylenether durch oxidative Kupplung von Phenolen herstellen. Polyarylenethersulfone oder -ketone entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden.

Bevorzugte Verfahrensbedingungen zur Synthese von Polyarylenethersulfonen oder -ketonen sind beispielsweise in der EP-A-113 112 und 135 130 beschrieben.

Die bevorzugten Polyarylenether weisen in der Regel einen Schmelzpunkt von mindestens 320°C (Polyarylenethersulfone) bzw. von mindestens 370°C (Polyarylenetherketone) auf.

Erfindungsgemäß können die Formmassen als Komponente A) Polyarylenethersulfone oder -ketone enthalten, die durch Umsetzen eines Polyarylenethersulfons oder -ketons $A_1$) mit einer reaktiven Verbindung erhältlich sind. Die reaktiven Verbindungen enthalten neben einer C,C-Doppel- oder Dreifachbindung eine bzw. mehrere Carbonyl-, Carbonsäure-, Carboxylat-, Säureanhydrid-, Säureimid-, Carbonsäureester-, Amino-, Hydroxyl-, Epoxi-, Oxazolin-, Urethan-, Harnstoff-, Lactam- oder Halogenbenzylgruppe(n).

Typisch geeignete Verbindungen sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$-$C_{18}$-Alkanolen, die Mono- oder Diamide dieser Säuren wie N-Phenylmaleinimid, Maleinsäurehydrazid.

Bevorzugt werden modifizierte Polyarylenethersulfone oder -ketone eingesetzt, die durch Umsetzen von 80 bis 99,9 Gew.-%, insbesondere 90 bis 99 Gew.-% des unmodifizierten Polyarylenethersulfonen oder -ketonen, mit 0,1 bis 20 Gew.-%, insbesondere 1 bis 10 Gew.-% der reaktiven Verbindung erhalten worden sind.

Als Radikalstarter können in der Regel die in der Fachliteratur (z.B. J.K. Kochi, "Free Radicals", J. Wiley, New York, 1973) beschriebenen Verbindungen Verwendung finden.

Üblicherweise werden die Radikalstarter in Mengen von etwa 0,01 bis etwa 1 Gew.-%, bezogen auf die eingesetzten Polyarylenethersulfone oder -ketone verwendet. Selbstverständlich können auch Mischungen unterschiedlicher Radikalstarter eingesetzt werden.

Entsprechend modifizierte Polyphenylenether sind u.a. aus der WO 87/00540 bekannt, welche bevorzugt mit Polyamiden als Blendkomponente gemischt werden.

Als Komponente B) enthalten die erfindungsgemäßen Formmassen 0,1 bis 50, bevorzugt 1 bis 35 und insbesondere 5 bis 25 Gew.-% eines Phosphazens der allgemeinen Formel I

$$(PN_{2-x}H_{1-y})_z \qquad \text{I}$$

worin x, y und z unabhängig voneinander folgende Zahlenwerte bedeuten:

$1 > x > 0{,}05$, bevorzugt $0{,}8 > x > 0{,}15$,
insbesondere $0{,}7 > x > 0{,}3$
$1 > y > 0{,}05$, bevorzugt $0{,}7 > y > 0{,}05$,
insbesondere $0{,}6 > Y > 0{,}1$
$z > 1$

Geeignete Herstellverfahren sind z.B. in Gmelin's Handbuch der anorganischen Chemie, 8. Auflage (1965), Verlag Chemie, Weinheim/ Bergstr.; System-Nr. 16 (Phosphor), Teil C, S. 302-329 beschrieben.

Allgemein sind Phosphazene I erhältlich durch Umsetzung eines Phosphorhalogenids oder eines Phosphorstickstoffhalogenids mit Ammoniak, wobei man zunächst Ammoniumhalogenid und danach Ammoniak abtrennt, während man die Temperatur von der jeweiligen Ausgangstemperatur auf eine Temperatur im Bereich von 500 bis 850°C, insbesondere von 550 bis 780°C und ganz besonders von 580 bis 780°C steigert.

Geeignete Phosphorhalogenide oder Phosphorstickstoffhalogenide sind solche des 3- bzw. 5-wertigen Phosphors, wobei Chloride wie $PCl_3$, $PCl_5$ oder $(PNCl_2)_3$ bevorzugt sind. Bei der Umsetzung mit Ammoniak geht man in der Regel von Ausgangstemperaturen aus, die sich z.B. nach dem jeweiligen Aggregatzustand des eingesetzten Halogenids richten, beispielsweise bei Raumtemperatur für die Umsetzung von $PCl_5$ mit Ammoniak:

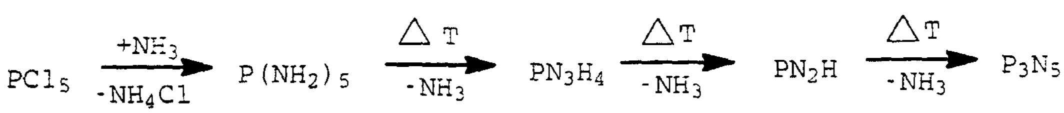


Während Ammoniumchlorid durch Sublimation abgetrennt wird, bilden sich mit steigender Temperatur formal die Verbindungen $P(NH_2)_5$, $PN_3H_4$, $PN_2H$ und $P_3N_5$.

Diese Formeln stehen hierbei für die Zusammensetzung, welche durch Elementaranalyse ermittelt werden kann (oft auch als Häufigkeit der verschiedenen Elemente relativ zueinander bezeichnet) .

Die diese Verbindungen konstituierenden Elemente P, N und H liegen dabei vermutlich in einem dreidimensionalen Gitter - wie nachfolgend dargestellt - vor, wobei Mischungen aus oligomeren bis polymeren Verbindungen mit nicht definiertem Kondensationsgrad z vorliegen.

Bei steigender Temperatur und unter Ammoniakabspaltung bilden sich zunehmend vernetzte Phosphazenscrukturen der Stöchiometrie gemäß Formel I aus.

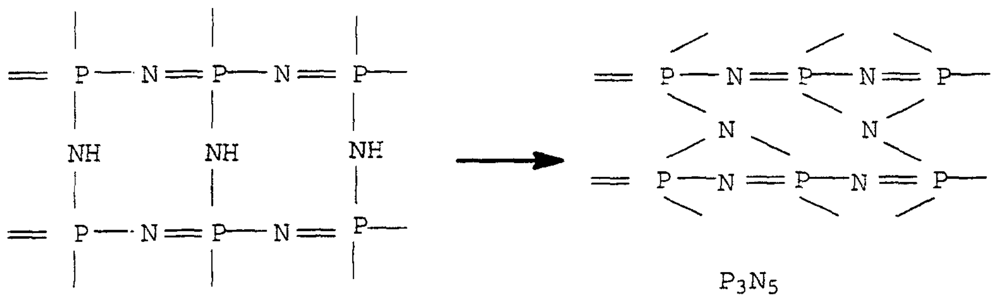

$P_3N_5$

$PN_2H$

II

III

Die erfindungsgemäß in den Formmassen verwendeten Phophazene I stellen vermutlich "Zwischenstrukturen" zwischen II und III dar (fließender Übergang zwischen den Strukturen), deren Kondensationsgrad z, wie in Formel 1 angegeben, variabel ist und in der Regel nicht quantitativ ermittelt werden kann.

Vermutungen weisen darauf hin, daß z im allgemeinen unendlich sein kann, in der Regel einen Wert größer $10^{25}$ annehmen kann. Häufig beträgt z bis zu $10^{30}$, vorzugsweise bis zu $10^{25}$.

Üblicherweise beschränkt sich daher die Charakterisierung dieser Verbindungen auf die Angabe ihrer Elementarzusammensetzungen (oft auch als Häufigkeit der verschiedenen Elemente relativ zueinander bezeichnet), welche durch Elementaranalyse ermittelt werden kann.

Als Komponente C) können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 70, insbesondere nicht mehr als 50, bezogen auf das Gesamtgewicht der Komponenten A) bis C).

Als Zusatzstoffe seien Schlagzähmodifier genannt (auch als kautschukelastische Polymerisate oder Elastomere bezeichnet), die in Mengen bis zu 20 Gew.-%, bevorzugt bis zu 15 Gew.-% enthalten sein können.

Geeignet sind übliche Kautschuke, z. B. Ethylencopolymere mit reaktiven Gruppen, Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z. B. in Betracht: hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau $M^1M^2$-, $M^1M^2M^1M^2$- oder $M^1M^2M^1$-, wobei diese Blockpolymerisate auch Segmente mit statistischer Verteilung enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassen in "Ull-manns Encyklopädie der Technischen Chemie", 4. Auflage, Bd. 13, Seiten 595 bis 634, Verlag Chemie GmbH, Weinheim 1977, beschrieben.

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare Polymere kommen als Zusatzstoffe in Betracht, wobei Polyethylenwachs als Gleitmittel besonders bevorzugt ist.

Über Art und Menge dieser Zusatzstoffe lassen sich die gewünschten Eigenschaften der Endprodukte in weitem Maße steuern.

Die Herstellung der erfindungsgemäßen Formmassen kann nach an sich bekannten Verfahren erfolgen. Nach einer bevorzugten Ausführungsform erfolgt die Herstellung durch Zugabe der Komponente B) sowie C), zur Schmelze der Komponente A).

Zweckmäßigerweise verwendet man hierzu Extruder, z.B. Einschnekken- oder Zweischneckenextruder oder andere herkömmliche Plastifizierungsvorrichtungen wie Brabender-Mühlen oder Banbury-Mühlen.

Die Kunststoffmischungen kann man bei Anwesenheit eines thermoplastischen Polykondensates danach einer weiteren thermischen Behandlung, d.h. einer Nachkondensation in fester Phase unterwerfen. In Temperaggregaten wie z.B. einem Taumler-Mischer oder kontinuierlich sowie diskontinuierlich betriebenen Temperrohren tempert man die in der jeweiligen Bearbeitungsform vorliegende Formmasse, bis die gewünschte Viskositätszahl VZ oder relative Viskosität ηrel z.B. des Polyamids erreicht wird. Der Temperaturbereich der Temperung hängt vom Schmelzpunkt der reinen Komponente A) ab. Bevorzugte Temperaturbereiche sind 5 bis 50, vorzugsweise 20 bis 30°C unterhalb des jeweiligen Schmelzpunkts von A). Das Verfahren erfolgt vorzugsweise in einer Inertgasatmosphäre, wobei Stickstoff und überhitzter Wasserdampf als Inertgase bevorzugt sind.

Die Verweilzeiten betragen im allgemeinen von 0,5 bis 50, vorzugsweise 4 bis 20 Stunden. Anschließend werden aus den Formmassen mittels üblicher Vorrichtungen Formteile hergestellt.

Die erfindungsgemäßen Formmassen zeichnen sich durch eine gute Verarbeitbarkeit sowie durch eine gute Flammfestigkeit insbesondere kein brennendes Abtropfen aus. Deshalb eignen sie sich zur Herstellung von Fasern, Folien und Formkörpern jeglicher Art, welche insbesondere im Elektrobereich sowie Elektronikindustrie (z.B. Gehäuseteile im Büro- und EDV-Sektor, Spulenkörper, Schutzschalter, Steckerleisten, Schalterteile, Abdeckungen und Computergehäuse) verwendet werden.

Beispiele

Komponente A:

A1: Poly-ε-Caprolactam mit einer Viskositätszahl VZ von 151 ml/g gemessen als 0,5 %ige Lösung in 96 gew.-%iger $H_2SO_4$ bei 25°C; Ultramid® B3 der BASF AG.

A2: PA 66 mit einer VZ von 148 ml/g, Ultramid® A3 der BASF AG.

A3: Polybutylenterephthalat mit einer VZ von 130 ml/g gemessen in Phenol/Dichlorbenzol (1:1) bei 25°C, Ultradur® B4500 der BASF AG

A4: Poly-2,6-dimethyl-1,4-phenylenether mit einem mittleren Molekulargewicht ($\overline{M}_w$) von 40 000 (GPC in Chloroform gegenüber Polystyrol-Standard bei T 25°C)

A5: Schlagfestes Polystyrol KR 2756 der BASF AG mit 9 Gew.-% Polybutadien. Die mittlere Teilchengröße der Weichkomponente ($d_{50}$-Wert) betrug 1,9 μm.

A6: Polycarbonat aus Bisphenol A/Phosgen
mit einer VZ von 62,4 ml/g, gemessen in Dichlormethan als 0,5 gew.-%ige Lösung bei 23°C

A7: Ein ASA Pfropfpolymerisat aufgebaut aus einer Pfropfgrundlage

$A_{11}$: 98 Gew.-% n-Butylacrylat
$A_{12}$: 2 Gew.-% Tricyclodecenylacrylat und einer Pfropfauflage aus
$A_{21}$: 75 Gew.-% Styrol
$A_{22}$: 25 Gew.-% Acrylnitril

in Mischung mit einer Hartmatrix auf Basis eines SAN-Polymeren aufgebaut aus:

$A_{31}$: 80 Gew.-% Styrol
$A_{32}$: 20 Gew.-% Acrylnitril

Die Viskositätszahl der Hartmatrix betrug 83 ml/g; gemessen an einer 0,5 gew.-%igen Lösung in Dimethylformamid bei 23°C.

Herstellung der Komponente B)

Zur Synthese von Phosphazenen der allgemeinen Formel $(PN_{2-x}H_{1-y})_z$ wurde ein 6 1-Drehrohrkolben aus Quarzglas mit 800 g $PCl_5$ gefüllt. Bei einer Rotationsgeschwindigkeit von ca. 1-5 Umdrehungen pro Minute wurde, durch Einleitung eines Ammoniak-Gasstroms von 48 Nl/h in den Drehrohrkolben, das $PCl_5$ zur Reaktion gebracht. Die Temperatur wurde dabei innerhalb von 5 h auf 100°C gebracht und dort 10 h gehalten. Anschließend wurde die Temperatur innerhalb von 5 h auf 340°C erhöht und 5 h gehalten. Anschließend wurde mit einer Aufheizrate von 20°C/h die jeweils gewünschte Endtemperatur eingestellt, die zwischen 470 und 800°C lag. Diese Endtemperatur wurde 5 h gehalten. Bei der Reaktion als Nebenprodukt entstandenes Ammoniumchlorid sublimierte ($T_{sub}$ = 340°C) vollständig ab und wurde mit dem Gasstrom ausgetragen. Nach dem Abkühlen des Ofens konnten die gewünschten Phosphazene als farblose Feststoffe erhalten werden.

Die Zusammensetzung der so erhaltenen Phosphazene wurde mittels Elementaranalyse bestimmt.

B/1 $PN_{1.39}H_{0.46}$ hergestellt bei 780°C-Reaktionsendtemperatur
B/2 $PN_{1.97}H_{1.00}$ hergestellt bei 450°C-Reaktionsendtemperatur (zum Vergleich gemäß EP 417 839)

Komponente C

C1: Silanisierte Schnittglasfaser mit einem Durchmesser im Mittel von 10 µm

C2: Styrol-Butadien-Styrol-Dreiblockcopolymer (hydriert) mit einem Styrolgehalt von 29 Gew.-% (Kraton® G1650 der Firma Shell AG)

Herstellung der thermoplastischen Formmassen

Die Komponenten A) bis C) wurden in den der Tabelle zu entnehmenden Mengenverhältnis auf einer ZSK 25 mit 5 kg/h und einer Umdrehungszahl von 120 min-1 abgemischt, der Strang extrudiert, im Wasserbad gekühlt und anschließend granuliert sowie bei 80°C im Vakuum 10 h getrocknet. Die Schnittglasfasern wurden in den Schmelzestrom dosiert.
Die Verarbeitungstemperaturen sind in der Tabelle 1 angegeben.
Aus dem Granulat wurden auf einer Spritzgußmaschine bei 260 bzw. 280°C (Beispiele 4,5 u. 10) 1/16" Prüfstäbe hergestellt und nach üblicher Konditionierung gemäß UL94 (Flammschutzprüfung) geprüft.
Die Zusammensetzungen der Formmassen und die Ergebnisse der Messungen sind der Tabelle zu entnehmen.

Tabelle

| Beispiel | Zusammensetzung [Gew.-%] | Verarbeitungstemperatur [°C] | UL94 [1/16"] | brennendes Abtropfen |
|---|---|---|---|---|
| 1 | 80 A1 20 B1 | 260* | V-0 | nein |
| 2 | 60 A1 15 B1 25 C1 | 260 | V-0 | nein |
| 3* | 55 A1 20 B2 25 C1 | 260 | V-2 | ja |
| 4 | 85 A2 15 B1 | 280 | V-0 | nein |
| 5 | 60 A2 15 B1 25 C1 | 280 | V-2 | nein |
| 6* | 60 A2 15 B2 25 C1 | 280 | V-2 | ja |
| 7 | 80 A3 20 B1 | 260 | V-0 | nein |
| 8 | 55 A3 20 B1 25 C1 | 260 | V-0 | nein |
| 9* | 55 A3 20 B2 25 C1 | 260 | n.K. | ja |
| 10 | 39,5 A4 und 45 A5 12 B/1 3,5 C2 | 280 | V-0 | nein |
| 11 | 66 A6, 22 A7 12 B1 | 260 | V-0 | nein |

*) zum Vergleich

nk = nicht klassifiziert

## Patentansprüche

1. Flammgeschützte thermoplastische Formmassen, enthaltend

A) 5 bis 99 Gew.-% eines thermoplastischen Polymeren
B) 0,1 bis 50 Gew.-% eines Phosphazens der allgemeinen Formel I

$$(PN_{2-x}H_{1-y})_z \qquad I$$

worin x, y und z unabhängig voneinander folgende Zahlenwerte bedeuten:
$1 > x > 0,05$
$1 > y > 0,05$
$z > 1$
C) 0 bis 70 Gew.-% weiterer Zusatzstoffe und Verarbeitungshilfsmittel,
wobei die Summe der Gewichtsprozente der Komponenten A) bis C) 100 % ergibt.

2. Flammgeschützte thermoplastische Formmassen nach Anspruch 1, in denen das thermoplastische Polymer A) ausgewählt ist aus der Gruppe der Polyester, Polycarbonate, Polyamide, Polyolefine, Polyoxymethylene, vinylaromatischen Polymeren, Polyarylenethern und Poly(meth)acrylaten oder deren Mischungen.

3. Flammgeschützte thermoplastische Formmassen nach den Ansprüchen 1 oder 2, in denen die Komponente B) erhältlich ist durch Umsetzung eines Phosphorhalogenids oder eines Phosphorstickstoffhalogenids mit Ammoniak, wobei man zunächst Ammoniumhalogenid und danach Ammoniak abtrennt, während man die Temperatur von der jeweiligen Ausgangstemperatur auf eine Temperatur im Bereich von 500° bis 850°C steigert.

4. Flammgeschützte thermoplastische Formmassen nach Anspruch 3, wobei man die Temperatur von der jeweiligen Ausgangstemperatur auf eine Temperatur im Bereich von 550 bis 780°C steigert.

5. Flammgeschützte thermoplastische Formmassen nach den Ansprüchen 1 bis 4, enthaltend

A1) 10-80 Gew.-% eines Polybutylenterephthalates
A2) 0 bis 40 Gew.-% eines Polyethylenterephthalates
A3) 1 bis 40 Gew.-% eines ASA- oder ABS-Polymeren oder deren Mischungen
B) 1 bis 35 Gew.-% eines Phosphazens gemäß Anspruch 1
C) 0 bis 40 Gew.-% eines faser- oder teilchenförmigen Füllstoffes oder deren Mischungen.

6. Flammgeschützte thermoplastische Formmassen nach den Ansprüchen 1 bis 4, enthaltend

A1) 10 bis 80 Gew.-% eines Polycarbonats
A2) 0 bis 40 Gew.-% eines Polyesters
A3) 1 bis 40 Gew.-% eines ASA- oder ABS-Polymeren oder deren Mischungen
B) 1 bis 35 Gew.-% eines Phosphazens gemäß Anspruch 1
C) 0 bis 40 Gew.-% eines faser- oder teilchenförmigen Füllstoffes oder deren Mischungen.

7. Verwendung der flammgeschützten thermoplastischen Formmassen gemäß den Ansprüchen 1 bis 6 zur Herstellung von Fasern, Folien und Formkörpern.

8. Formkörper, erhältlich aus den flammgeschützten thermoplastischen Formmassen gemäß den Ansprüchen 1 bis 6.

9. Spulenkörper, Schutzschalter, Steckerleisten, Schalterteile, Abdeckungen, Computergehäuse, erhältlich aus den flammgeschützten thermoplastischen Formmassen gemäß den Ansprüchen 1 bis 6.

## Claims

1. A flame-retardant thermoplastic molding composition comprising

A) from 5 to 99% by weight of a thermoplastic polymer,
B) from 0.1 to 50% by weight of a phosphazene of the general formula I

$$(PN_{2-x}H_{1-y})_z \qquad I$$

where the numerical values of x, y and z, independently of one another, are as follows:
$1 > x > 0.05$
$1 > y > 0.05$
$z > 1$, and
C) from 0 to 70% by weight of other additives and processing aids,
where the total of the percentages by weight of components A) to C) is 100%.

**2.** A flame-retardant thermoplastic molding composition as claimed in claim 1, in which the thermoplastic polymer A) is selected from the class consisting of polyesters, polycarbonates, polyamides, polyolefins, polyoxymethylenes, vinylaromatic polymers, polyarylene ethers and poly(meth)-acrylates and mixtures of these.

**3.** A flame-retardant thermoplastic molding composition as claimed in claim 1 or 2, in which component B) is obtainable by reacting a phosphorus halide or a phosphorus nitrogen halide with ammonia, where firstly ammonium halide and then ammonia are removed, while the temperature is raised from the respective starting temperature to a temperature in the range from 500 to 850°C.

**4.** A flame-retardant thermoplastic molding composition as claimed in claim 3, where the temperature is raised from the respective starting temperature to a temperature in the range from 550 to 780°C.

**5.** A flame-retardant thermoplastic molding composition as claimed in any of claims 1 to 4, comprising

A1) from 10 to 80% by weight of a polybutylene terephthalate,
A2) from 0 to 40% by weight of a polyethylene terephthalate,
A3) from 1 to 40% by weight of an ASA or ABS polymer or mixtures of these,
B) from 1 to 35% by weight of a phosphazene as claimed in claim 1, and
C) from 0 to 40% by weight of a fibrous or particulate filler or mixtures of these.

**6.** A flame-retardant thermoplastic molding composition as claimed in any of claims 1 to 4, comprising

A1) from 10 to 80% by weight of a polycarbonate,
A2) from 0 to 40% by weight of a polyester,
A3) from 1 to 40% by weight of an ASA or ABS polymer or mixtures of these,
B) from 1 to 35% by weight of a phosphazene as claimed in claim 1, and
C) from 0 to 40% by weight of a fibrous or particulate filler or mixtures of these.

**7.** The use of the flame-retardant thermoplastic molding composition claimed in any of claims 1 to 6 for producing fibers, films or moldings.

**8.** A molding obtainable from the flame-retardant thermoplastic molding composition as claimed in any of claims 1 to 6.

**9.** A coil former, a circuit breaker, a multipoint connector, a switch part, a cover or a computer case obtainable from the flame-retardant thermoplastic molding composition as claimed in any of claims 1 to 6.

## Revendications

**1.** Masses de moulage thermoplastiques ignifugées, contenant

A) 5 à 99% en poids d'un polymère thermoplastique,
B) 0,1 à 50% en poids d'un phosphazène de la formule générale I :

$$(PN_{2-x}H_{1-y})_z \quad I$$

dans laquelle x, y et z représentent, indépendamment l'un de l'autre, les valeurs numériques suivantes :
$1 > x > 0{,}05$
$1 > y > 0{,}05$
$z > 1$

C) 0 à 70% en poids d'autres additifs et agents auxiliaires de traitement,
la somme des % en poids des composants A) à C) donnant 100%.

**2.** Masses de moulage thermoplastiques ignifugées suivant la revendication 1, dans lesquelles le polymère thermoplastique A) est choisi parmi le groupe des polyesters, des polycarbonates, des polyamides, des polyoléfines, des polyoxyméthylènes, des polymères vinyl-aromatiques, des éthers de polyarylène et des poly(méth)acrylates ou de leurs mélanges.

**3.** Masses de moulage thermoplastiques ignifugées suivant l'une des revendications 1 et 2, dans lesquelles le composant B) peut être obtenu par réaction d'un halogénure de phosphore ou d'un halogénure de phosphore-azote avec de l'ammoniac, de l'halogénure d'ammonium étant tout d'abord isolé et ensuite de l'ammoniac, tandis

**4.** Masses de moulage thermoplastiques ignifugées suivant la revendication 3, dans lesquelles on augmente la température de la température de départ respective à une température de l'ordre de 550 à 780°C.

**5.** Masses de moulage thermoplastiques ignifugées suivant l'une des revendications 1 à 4, contenant

A1) 10 à 80% en poids d'un téréphtalate de polybutylène,
A2) 0 à 40% en poids d'un téréphtalate de polyéthylène,
A3) 1 à 40% en poids d'un polymère ASA ou ABS ou de leurs mélanges,
B) 1 à 35% en poids d'un phosphazène suivant la revendication 1,
C) 0 à 40% en poids d'une matière de remplissage fibreuse ou particulaire ou de mélanges de celles-ci.

**6.** Masses de moulage thermoplastiques ignifugées suivant l'une des revendications 1 à 4, contenant

A1) 10 à 80% en poids d'un polycarbonate,
A2) 0 à 40% en poids d'un polyester,
A3) 1 à 40% en poids d'un polymère ASA ou ABS ou de leurs mélanges,
B) 1 à 35% en poids d'un phosphazène suivant la revendication 1,
C) 0 à 40% en poids d'une matière de remplissage fibreuse ou particulaire ou de mélanges de celles-ci.

**7.** Utilisation des masses de moulage thermoplastiques ignifugées suivant l'une des revendications 1 à 6, pour la fabrication de fibres, de feuilles et de corps façonnés.

**8.** Corps façonnés, que l'on peut obtenir à partir des masses de moulage thermoplastiques ignifugées suivant l'une des revendications 1 à 6.

**9.** Mandrin de bobine, commutateur de sécurité, barre d'enfichage, pièce de commutateur, recouvrements, boîtier d'ordinateur, que l'on peut obtenir à partir des masses de moulage thermoplastiques ignifugées suivant l'une des revendications 1 à 6.